# EUROPEAN PATENT APPLICATION

(11) **EP 3 032 774 A1**
(43) Date of publication of application: **15.06.2016**
(21) Application number: 14839124.6
(22) Date of filing: 11.08.2014
(51) Int. Cl.: H04L 7/00, H04J 3/06

(54) **METHOD AND DEVICE FOR DETERMINING ETHERNET CLOCK SOURCE**

(30) Priority: 02.09.2013 CN 201310392429
(71) Applicant: Huawei Technologies Co., Ltd., Longgang District Shenzhen, Guangdong 518129 (CN)
(72) Inventor: CHEN, Cong, Shenzhen Guangdong 518129 (CN)
(74) Representative: Gill Jennings & Every LLP
(86) International application number: PCT/CN2014/084063
(87) International publication number: WO 2015/027813

(57) **Abstract**

The present invention discloses a method and an apparatus for determining an Ethernet clock source. The method includes: receiving a first clock information packet sent by a first clock device, where the first clock information packet is used to indicate clock source information of the first clock device; based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device and a current second clock device, determining a target clock source from a clock source of the second clock device and a clock source of the first clock device; and determining the target clock source as a clock source of the second clock device. In the method and the apparatus for determining an Ethernet clock source according to embodiments of the present invention, a preferable clock source can be simply, effectively, and reliably determined, a clock can be prevented from forming a loop, and clock deployment can be simplified.

## Description

### TECHNICAL FIELD

This present invention relates to the field of communications, and in particular, to a method and an apparatus for determining an Ethernet clock source in the field of communications.

### BACKGROUND

Software-defined networking (Software Defined Network, "SDN" for short) raises a requirement of simplifying deployment of network devices, and basic configuration of some bottom-layer networks needs to be automatically completed by network devices (forwarding layer). For a mobile bearer scenario of the SDN, clock synchronization is a relative bottom-layer basic configuration, a clock needs to be plug-and-play as far as possible after a device is deployed on a network, and configuration of a clock on a control layer or an application layer should be as simple as possible. Currently, a mainstream solution to clock synchronization is a synchronous Ethernet technology and a frequency synchronization (SyncE) technology, and currently, normal operation of the technologies can be achieved only when a user performs network planning and delivers a configuration of a clock source priority at an application layer.

Currently, the synchronous Ethernet technology is a solution to network clock synchronization, and the solution is a mainstream technical solution applied to a network. In the synchronous Ethernet technology, a clock frequency is recovered based on a physical layer signal, where performance is stable, and application is mature; and in the technology, a clock source is selected according to the G.8264 standard, where a preferable selection sequence from high to low for timing reference signals is: a human mandatory order, timing signal failure, a synchronization status message (SSM-Synchronization Status Message, "SSM" for short) quality grade, and a preset priority.

In the synchronous Ethernet technology, an SSM protocol packet includes only "clock quality grade" information, which is used for a node to select a clock signal with a high clock quality grade from multiple external or local clock signals for tracking. However, an external clock signal priority, which can be used for comparison and selection, of each node needs to be manually planned and configured, and therefore not only planning and configuration are caused to be complex, but a loop and a non-preferable tracking path are also easily formed at a whole network layer. In addition, with a network being meshing (MESH) and becoming larger, a problem of complex and error-prone planning and configuration of a clock tracking relationship is more prominent, and requirements of the SDN cannot be met.

In the frequency synchronization technology, 1588v2 frequency synchronization is used, and in the technology, a frequency is recovered by using a timestamp carried in a packet and a clock source can be automatically selected by using an algorithm, and therefore application and deployment flexibility is higher. However, the 1588v2 frequency synchronization synchronizes frequencies based on a packet, and performance of the 1588v2 frequency synchronization is related to a packet sending rate, traffic, and the like, and therefore performance stability is not as high as that of physical layer synchronization. In addition, the frequency synchronization technology does not use a conventional SSM indicating a clock quality grade, and therefore cannot be interconnected to an existing synchronous Ethernet.

### SUMMARY

In view of this, embodiments of the present invention provide a method and an apparatus for determining an Ethernet clock source, which can simply, effectively, and reliably determine a preferable clock source, can prevent a clock from forming a loop, and simplify clock deployment.

According to a first aspect, a method for determining an Ethernet clock source is provided, where the method includes: receiving a first clock information packet sent by a first clock device, where the first clock information packet is used to indicate clock source information of the first clock device; based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device and a current second clock device, determining a target clock source from a clock source of the second clock device and a clock source of the first clock device; and determining the target clock source as a clock source of the second clock device.

With reference to the first aspect, in a first possible implementation manner of the first aspect, the method further includes: when the clock source of the second clock device is different from the target clock source, sending a second clock information packet to a third clock device separately connected to each port of the second clock device, where the second clock information packet includes a clock source device identifier, a clock source device quality grade, and a clock source information transfer hop count of the second clock device.

With reference to the first aspect, in a second possible implementation manner of the first aspect, the determining a target clock source includes: when the clock source device identifiers of the second clock device and the first clock device are different, determining that a clock source with a lowest clock source device quality grade is the target clock source.

With reference to the first aspect, in a third possible implementation manner of the first aspect, the determining a target clock source includes: when the clock source device identifiers of the second clock device and the first clock device are different, and the clock source device quality grades of the second clock device and the first clock device are the same, determining that a clock source with a smallest clock source device identifier is the target clock source.

With reference to the first aspect, in a fourth possible implementation manner of the first aspect, the determining a target clock source includes: when the clock source device identifiers of the second clock device and the first clock device are the same, determining that a clock source with a smallest clock source information transfer hop count is the target clock source.

With reference to the first aspect, in a fifth possible implementation manner of the first aspect, the determining a target clock source includes: when the clock source device identifiers of the second clock device and the first clock device are the same, and the clock source information transfer hop counts are also the same, determining that a clock source of a clock device with a smallest clock source information sending device identifier is the target clock source.

With reference to the first aspect, in a sixth possible implementation manner of the first aspect, the determining a target clock source includes: when the clock source device identifiers of the second clock device and the first clock device are the same, the clock source information transfer hop counts are the same, and the clock source information sending device identifiers are also the same, determining that a clock source of a clock device with a smallest clock source information receiving port number is the target clock source.

With reference to the first aspect or any one possible implementation manner of the first to sixth possible implementation manners of the first aspect, in a seventh possible implementation manner of the first aspect, the clock source information includes a clock source device identifier, a clock source device quality grade, and a clock source information transfer hop count.

With reference to the first aspect or any one possible implementation manner of the first to sixth possible implementation manners of the first aspect, in an eighth possible implementation manner of the first aspect, the clock source device identifier is a media access control MAC address of a network element on which a clock source is located, an IP address of the network element, or a device identifier of the network element.

According to a second aspect, an apparatus for determining an Ethernet clock source is provided, where the apparatus includes: a receiving module, configured to receive a first clock information packet sent by a first clock device, where the first clock information packet is used to indicate clock source information of the first clock device; a first determining module, configured to: based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device received by the receiving module and a second clock device included in the apparatus, determine a target clock source from a clock source of the second clock device and a clock source of the first clock device; and a second determining module, configured to determine the target clock source determined by the first determining module as a clock source of the second clock device.

With reference to the second aspect, in a first possible implementation manner of the second aspect, the apparatus further includes: a sending module, configured to: when the clock source of the second clock device is different from the target clock source determined by the first determining module, send a second clock information packet to a third clock device separately connected to each port of the second clock device, where the second clock information packet includes a clock source device identifier, a clock source device quality grade, and a clock source information transfer hop count of the second clock device.

With reference to the second aspect, in a second possible implementation manner of the second aspect, the first determining module includes: a first determining unit, configured to: when the clock source device identifiers of the second clock device and the first clock device are different, determine that a clock source with a lowest clock source device quality grade is the target clock source.

With reference to the second aspect, in a third possible implementation manner of the second aspect, the first determining module includes: a second determining unit, configured to: when the clock source device identifiers of the second clock device and the first clock device are different, and the clock source device quality grades of the second clock device and the first clock device are the same, determine that a clock source with a smallest clock source device identifier is the target clock source.

With reference to the second aspect, in a fourth possible implementation manner of the second aspect, the first determining module includes: a third determining unit, configured to: when the clock source device identifiers of the second clock device and the first clock device are the same, determine that a clock source with a smallest clock source information transfer hop count is the target clock source.

With reference to the second aspect, in a fifth possible implementation manner of the second aspect, the first determining module includes: a fourth determining unit, configured to: when the clock source device identifiers of the second clock device and the first clock device are the same, and the clock source information transfer hop counts are also the same, determine that a clock source of a clock device with a smallest clock source information sending device identifier is the target clock source.

With reference to the second aspect, in a sixth possible implementation manner of the second aspect, the first determining module includes: a fifth determining unit, configured to: when the clock source device identifiers of the second clock device and the first clock device are the same, the clock source information transfer hop counts are the same, and the clock source information sending device identifiers are also the same, determine that a clock source of a clock device with a smallest clock source information receiving port number is the target clock source.

With reference to the second aspect or any one possible implementation manner of the first to sixth possible implementation manners of the second aspect, in a seventh possible implementation manner of the second aspect, the clock source information includes a clock source device identifier, a clock source device quality grade, and a clock source information transfer hop count of the first clock device.

With reference to the second aspect or any one possible implementation manner of the first to sixth possible implementation manners of the second aspect, in an eighth possible implementation manner of the second aspect, the clock source device identifier is a media access control MAC address of a network element on which a clock source is located, an IP address of the network element, or a device identifier of the network element.

Based on the foregoing technical solutions, in the method and the apparatus for determining an Ethernet clock source according to the embodiments of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a method for determining an Ethernet clock source according to an embodiment of the present invention;
FIG. 2 is a schematic flowchart of a method for determining a target clock source according to an embodiment of the present invention;
FIG. 3 is another schematic flowchart of a method for determining a target clock source according to an embodiment of the present invention;
FIG. 4 is still another schematic flowchart of a method for determining a target clock source according to an embodiment of the present invention;
FIG. 5 is another schematic flowchart of a method for determining an Ethernet clock source according to an embodiment of the present invention;
FIG. 6 is a schematic block diagram of an apparatus for determining an Ethernet clock source according to an embodiment of the present invention;
FIG. 7 is another schematic block diagram of an apparatus for determining an Ethernet clock source according to an embodiment of the present invention;
FIG. 8 is a schematic block diagram of a first determining module according to an embodiment of the present invention;
FIG. 9 is another schematic block diagram of a first determining module according to an embodiment of the present invention; and
FIG. 10 is still another schematic block diagram of an apparatus for determining an Ethernet clock source according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that, the technical solutions of the embodiments of the present invention may be applied to various communications systems, such as: a Global System for Mobile Communications (Global System of Mobile communication, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short), a Universal Mobile Telecommunications System (Universal Mobile Telecommunication System, "UMTS" for short), and a Worldwide Interoperability for Microwave Access (Worldwide Interoperability for Microwave Access, "WiMAX" for short) communications system.

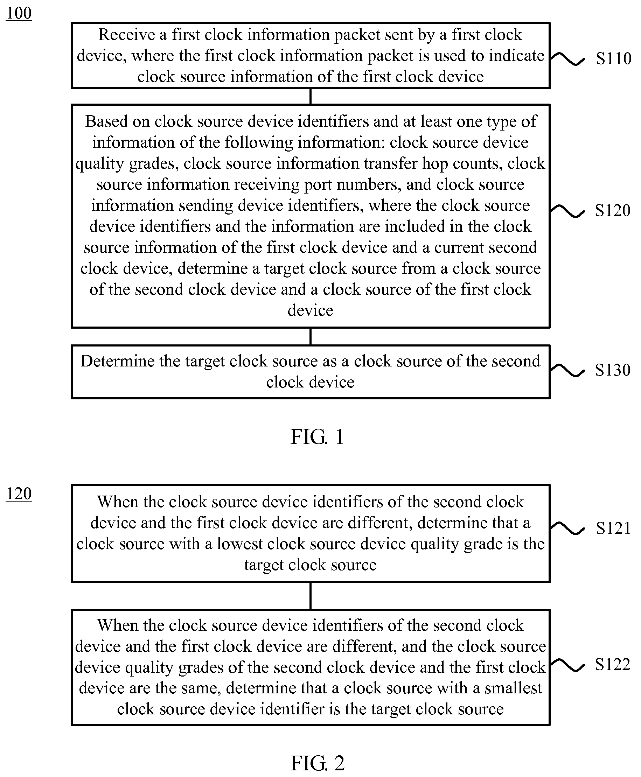

FIG. 1 shows a schematic flowchart of a method 100 for determining an Ethernet clock source according to an embodiment of the present invention, and the method 100 may be executed by, for example, a clock device or a network device including a clock device. As shown in FIG. 1, the method 100 includes:
S110. Receive a first clock information packet sent by a first clock device, where the first clock information packet is used to indicate clock source information of the first clock device.
S120. Based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device and a current second clock device, determine a target clock source from a clock source of the second clock device and a clock source of the first clock device.
S130. Determine the target clock source as a clock source of the second clock device.

For example, in software-defined networking SDN, after a first clock device is powered on or when a clock source information of a first clock device changes, the first clock device may send clock source information through its port to a second clock device connected to the first clock device, where the clock source information may include, for example, a clock source device identifier of the first device. When receiving a packet that is sent by the first clock device and is used to indicate the clock source information of the first clock device, based on clock source device identifiers of the first clock device and the second clock device and at least one type of clock source device quality grades, clock source information transfer hop counts, clock source information receiving port numbers, and clock source information sending device identifiers of the first clock device and the second clock device, the second clock device determines a preferable target clock source from a clock source of the second clock device and a clock source of the first clock device, and determines the target clock source as a clock source of the second clock device.

Therefore, in the method for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

It should be understood that, this embodiment of the present invention is merely described by using the SDN as an example, but the present invention is not limited thereto, and the method for determining an Ethernet clock source according to this embodiment of the present invention may also be applied to other networks or systems.

Specifically, in S110, the second clock device receives the first clock information packet sent by the first clock device, where the first clock information packet is used to indicate the clock source information of the first clock device.

The first clock information packet is, for example, an Ethernet Synchronization Messaging Channel (Ethernet Synchronization Messaging Channel, "ESMC" for short) packet specified by the G.8264, and the ESMC packet includes the clock source information of the first clock device, for example, the ESMC packet may also include a clock source device identifier. The first clock information packet is, for another example, an announce (Announce) packet defined in the 1588v2, and the announce packet includes the clock source information of the first clock device.

It should be understood that, this embodiment of the present invention is merely described by using the ESMC packet and the announce packet as examples, but the present invention is not limited thereto, and a clock information packet may also be another packet used to indicate clock source information of a clock device.

In this embodiment of the present invention, the clock source information includes a clock device identifier, and the clock source information may also include at least one type of information of the following information: a clock source device quality grade, a clock source information transfer hop count, a clock source information receiving port number, and a clock source information sending device identifier. Optionally, in this embodiment of the present invention, the clock source information includes a clock source device identifier, a clock source device quality grade, and a clock source information transfer hop count.

In this embodiment of the present invention, the clock source device identifier is used to identify a clock source of a clock device, and the clock source points to a clock device on a network element in a system or a network, and therefore the clock source device identifier may be indicated by identifier information of a corresponding clock device. Optionally, the clock source device identifier is a media access control (Media Access Control, "MAC" for short) address of a network element on which a clock source is located, an IP address of the network element, or a device identifier of the network element.

It should be understood that, in a system or a network, each network element has a unique clock device identifier (ID), where a clock device identifier ID may be formed by a set of digits, and identifier information of a clock device may be indicated by a MAC address of a network element, an IP address of a network element, or a device ID of a network element. For example, a clock device ID may be 80 bits (bits), and the 80 bits include, for example, a 48-bit MAC address and a 32-bit IPV4 address. It should be noted that, in an SDN network, a clock device ID of each network element is unique, and it is impossible that same clock device IDs exist in a network.

It should be understood that, in this embodiment of the present invention, a clock source device quality grade may be an SSM quality grade, that is, the same as a definition of SSM information specified in the International Telecommunication Union-Telecommunication Standardization Sector ITU-T G. 8264, so that the method and the apparatus according to this embodiment of the present invention can be interconnected to a conventional synchronous Ethernet. However the present invention is not limited thereto, for example, the clock source device quality grade may also be another parameter that measures a clock source priority.

In this embodiment of the present invention, a clock source information transfer hop count is used to represent the number of hops from a clock device, to which a clock source points or corresponds, to a current clock device; and may also be used to represent the number of hops for transferring a clock information packet to the current clock device.

It should be understood that, each time a clock information packet passes through a hop of network element, the number of transfer hops may automatically increase by 1. For example, it is assumed that a clock device A is connected to a clock device C by using a clock device B, and when A receives a clock information packet sent by B, if a clock source indicated by the clock information packet is the clock device C, the number of hops that the clock information packet passes from C to A is a clock source information transfer hop count; specifically, from C to A, two hops of network elements B and A need to be passed, and therefore a clock source information transfer hop count of B received by A is 2. It should also be understood that, for example, if a clock source of A points to A, a clock source information transfer hop count of A may be 0 by default; and for another example, if the clock source of A points to B, the clock source information transfer hop count of A is 1.

In this embodiment of the present invention, a clock source information receiving port number is used to identify a port that receives a clock information packet. It should be understood that, ports of each network element all have one port number used for identification, where the port number may be formed by a string of digits. For example, a port number includes 32 bits, where the 32 bits may be formed by a 16-bit slot number of and a 16-bit port number. It should be noted that ports of each network element are unique on the network element, and it is impossible that two ports with a same port number exist on a same network element.

In this embodiment of the present invention, the clock source information sending device identifier is used to identify a clock device that sends a clock information packet, and the clock source information sending device identifier is, for example, a MAC address of a network element on which the clock device is located, an IP address of the network element, or a device identifier of the network element, but the present invention is not limited thereto.

In S120, based on the clock source device identifiers and the at least one type of the following information: clock source device quality grades, clock source information transfer hop counts, clock source information receiving port numbers, and clock source information sending device identifiers, the second clock device determines the target clock source from the clock source of the second clock device and the clock source of the first clock device.

In S130, the second clock device determines the target clock source as a clock source of the second clock device.

Therefore, in the method for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

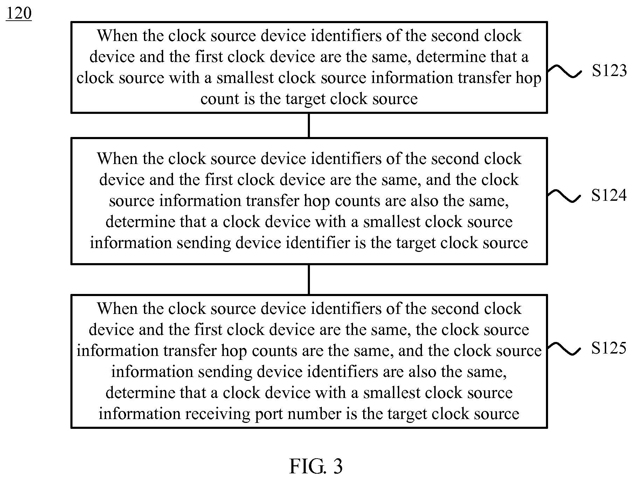

The following describes in detail, with reference to FIG. 2 and FIG. 3, a method for determining the target clock source by the second clock device.

As shown in FIG. 2, in this embodiment of the present invention, optionally, the determining the target clock source includes:
S121. When the clock source device identifiers of the second clock device and the first clock device are different, determine that a clock source with a lowest clock source device quality grade is the target clock source.

That is, during determining of the target clock source, clock source device identifiers of at least two clock devices including the second clock device and the first clock device may be compared first, and if the clock source device identifiers of the at least two clock devices are different, clock source device quality grades of the at least two clock devices may be compared, and a smaller value of a clock source device quality grade indicates a higher priority of a clock source.

Optionally, as shown in FIG. 2, the determining the target clock source includes:
S122. When the clock source device identifiers of the second clock device and the first clock device are different, and the clock source device quality grades of the second clock device and the first clock device are the same, determine that a clock source with a smallest clock source device identifier is the target clock source.

In this embodiment of the present invention, it may be determined first that the clock device identifiers of the second clock device and the first clock device are different, and when it is determined that the clock source device quality grades of the second clock device and the first clock device are the same, it is determined that the clock source with the smallest clock source device identifier is the target clock source. It should be understood that, in this embodiment of the present invention, it may also be determined first that the clock source device quality grades of the second clock device and the first clock device are the same, and when it is determined that the clock source device quality grades of the second clock device and the first clock device are the same, it is determined that a clock source with the smallest clock source device identifier is the target clock source, but the present invention is not limited thereto.

In this embodiment of the present invention, as shown in FIG. 3, optionally, the determining the target clock source includes:
S123. When the clock source device identifiers of the second clock device and the first clock device are the same, determine that a clock source with a smallest clock source information transfer hop count is the target clock source.

Optionally, the determining the target clock source includes:
S124. When the clock source device identifiers of the second clock device and the first clock device are the same, and the clock source information transfer hop counts are also the same, determine that a clock source of a clock device with a smallest clock source information sending device identifier is the target clock source.

Optionally, the determining the target clock source includes:
S125. When the clock source device identifiers of the second clock device and the first clock device are the same, the clock source information transfer hop counts are the same, and the clock source information sending device identifiers are also the same, determine that a clock source of a clock device with a smallest clock source information receiving port number is the target clock source.

Specifically, when it is determined that clock source device identifiers of at least two clock devices including the second clock device and the first clock device are the same, clock source information transfer hop counts of the at least two clock devices may be compared, and a smaller clock source information transfer hop count indicates a higher priority of a clock source of the clock device; if the clock source information transfer hop counts are also the same, clock source information sending device identifiers may be compared, and it may be determined that a clock source of a clock device with a smallest clock source information sending device identifier is the target clock source; and if the clock source information sending device identifiers are also the same, clock source information receiving port numbers may be further compared, and it may be determined that a clock source of a clock device with a smallest clock source information receiving port number is the target clock source.

It should be understood that, if the clock source information receiving port numbers are also the same, the determining of the target clock source may be terminated, so that a clock can be effectively prevented from forming a loop, and a more appropriate tracking path can be obtained.

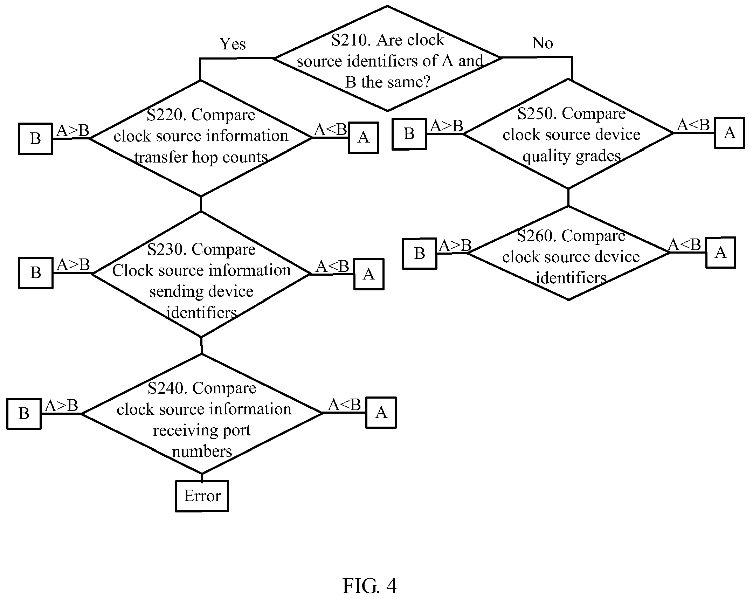

It should also be understood that, in this embodiment of the present invention, the first clock device may include one or more clock devices sending information packets to a second clock device, that is, the second clock device determines a target clock source from a clock source of the second clock device and clock sources of one or more first clock devices. This embodiment of the present invention is only described, with reference to FIG. 4, by using determining of a target clock source from two clock sources as an example, but the present invention is not limited thereto.

Specifically, for example, in SDN, after a network element is powered on, each port of a first clock device A may send a clock information packet periodically, where the clock information packet may include a clock source device identifier, a clock source device quality grade, and a clock source information transfer hop count of the clock device A. After receiving a clock information packet sent by A, a second clock device B may determine whether content of the clock information packet changes, and may determine a preferable target clock source, as shown in FIG. 4, when the content of the clock information packet changes.

For example, in S210, whether clock source device identifiers of A and B are the same may be determined first; if the clock source device identifiers of A and B are the same, a process proceeds to S220; otherwise, the process proceeds to S250.

In S220, clock source information transfer hop counts of A and B are compared, and if a clock source information transfer hop count of A is smaller, it is determined that a clock source of A is the target clock source; if a clock source information transfer hop count of B is smaller, it is determined that a clock source of B is the target clock source; and if the clock source information transfer hop counts of A and B are the same, the process proceeds to S230.

In S230, clock source information sending device identifiers of A and B are compared, and if a clock source information sending device identifier of A is smaller, it is determined that the clock source of A is the target clock source; if a clock source information sending device identifier of B is smaller, it is determined that the clock source of B is the target clock source; and if the clock source information sending device identifiers of A and B are the same, the process proceeds to S240.

In S230, clock source information receiving port numbers of A and B are compared, and if a clock source information receiving port number of A is smaller, it is determined that the clock source of A is the target clock source; if a clock source information receiving port number of B is smaller, it is determined that the clock source of B is the target clock source; and if the clock source information receiving port numbers of A and B are the same, the process terminates.

In S250, that is, when the clock source device identifiers of A and B are different, clock source device quality grades of A and B are compared, and if a clock source device quality grade of A is lower, it is determined that the clock source of A is the target clock source; if a clock source device quality grade of B is lower, the clock source of B is determined as the target clock source; and if the clock source device quality grades of A and B are the same, the process proceeds to S260.

In S260, the clock source device identifiers of A and B are compared, and if a clock source device identifier of A is smaller, it is determined that the clock source of A is the target clock source; and if a clock source device identifier of B is smaller, the clock source of the B is determined as the target clock source.

It should be understood that, if multiple ports of a second clock device receive clock information packets from multiple first clock devices, the second setting device may perform pairwise comparison according to the method shown in FIG. 4, and finally determine a most preferable target clock source.

Therefore, in the method for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

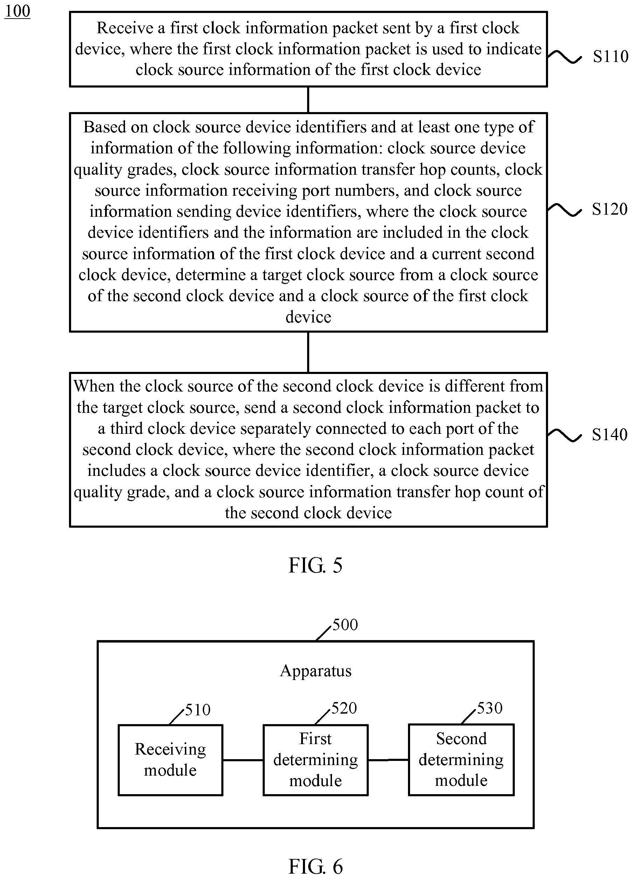

In this embodiment of the present invention, when a clock source of a clock device changes, or clock source information changes, for example, information such as a clock source device identifier, a clock source device quality grade, or a clock source information transfer hop count changes, the clock device may send a clock information packet periodically to a neighboring device. Optionally, in this embodiment of the present invention, as shown in FIG. 5, the method further includes:
S140. When the clock source of the second clock device is different from the target clock source, send a second clock information packet to a third clock device separately connected to each port of the second clock device, where the second clock information packet includes a clock source device identifier, a clock source device quality grade, and a clock source information transfer hop count of the second clock device.

It should be understood that, optionally, the clock source device identifier is a media access control MAC address of a network element on which a clock source is located, an IP address of the network element, or a device identifier of the network element.

It should also be understood that, in various embodiments of the present invention, sequence numbers of the foregoing procedures do not imply implementation sequences, and the implementation sequences of the procedures should be determined according to their functions and internal logic, and shall not constitute any limitations on the implementation procedures of the embodiments of the present invention.

Therefore, in the method for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

The forgoing describes in detail, with reference to FIG. 1 to FIG. 5, the method for determining an Ethernet clock source according to the embodiment of the present invention, and the following describes in detail, with reference to FIG. 6 to FIG. 10, an apparatus for determining an Ethernet clock source according to an embodiment of the present invention.

As shown in FIG. 6, an apparatus 500 for determining an Ethernet clock source according to an embodiment of the present invention includes:
a receiving module 510, configured to receive a first clock information packet sent by a first clock device, where the first clock information packet is used to indicate clock source information of the first clock device;
a first determining module 520, configured to: based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device received by the receiving module 510 and a second clock device included in the apparatus, determine a target clock source from a clock source of the second clock device and a clock source of the first clock device; and
a second determining module 530, configured to determine the target clock source determined by the first determining module 520 as a clock source of the second clock device.

Therefore, in the apparatus for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

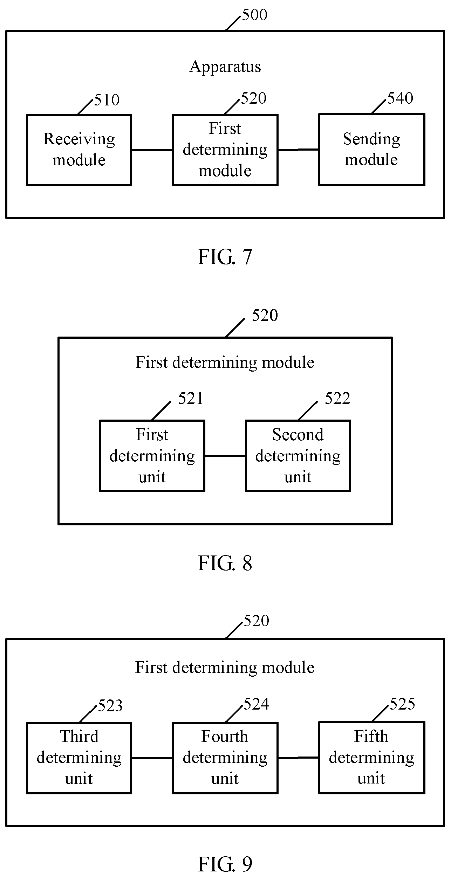

In this embodiment of the present invention, optionally, as shown in FIG. 7, the apparatus 500 further includes:
a sending module 540, configured to: when the clock source of the second clock device is different from the target clock source determined by the first determining module 520, send a second clock information packet to a third clock device separately connected to each port of the second clock device, and the second clock information packet includes a clock source device identifier, a clock source device quality grade, and a clock source information transfer hop count of the second clock device.

Optionally, as shown in FIG. 8, the first determining module 520 includes:
a first determining unit 521, configured to: when the clock source device identifiers of the second clock device and the first clock device are different, determine that a clock source with a lowest clock source device quality grade is the target clock source.

Optionally, as shown in FIG. 8, the first determining module 520 includes:
a second determining unit 522, configured to: when the clock source device identifiers of the second clock device and the first clock device are different, and the clock source device quality grades of the second clock device and the first clock device are the same, determine that a clock source with a smallest clock source device identifier is the target clock source.

In this embodiment of the present invention, optionally, as shown in FIG. 9, the first determining module 520 includes:
a third determining unit 523, configured to: when the clock source device identifiers of the second clock device and the first clock device are the same, determine that a clock source with a smallest clock source information transfer hop count is the target clock source.

Optionally, as shown in FIG. 9, the first determining module 520 includes:
a fourth determining unit 524, configured to: when the clock source device identifiers of the second clock device and the first clock device are the same, and the clock source information transfer hop counts are also the same, determine that a clock source of a clock device with a smallest clock source information sending device identifier is the target clock source.

Optionally, as shown in FIG. 9, the first determining module 520 includes:
a fifth determining unit 525, configured to: when the clock source device identifiers of the second clock device and the first clock device are the same, the clock source information transfer hop counts are the same, and the clock source information sending device identifiers are also the same, determine that a clock source of a clock device with a smallest clock source information receiving port number is the target clock source.

In this embodiment of the present invention, optionally, the clock source information includes a clock source device identifier, a clock source device quality grade, and a clock source information transfer hop count of the first clock device.

In the embodiment of the present invention, optionally, the clock source device identifier is a media access control MAC address of a network element on which a clock source is located, an IP address of the network element, or a device identifier of the network element.

It should be understood that, the apparatus 500 for determining an Ethernet clock source according to this embodiment of the present invention may correspond to an apparatus for determining an Ethernet clock source according to the embodiment of the present invention, and the foregoing and other operations and/or functions of each module of the apparatus 500 are to implement corresponding processes of the methods shown in FIG. 1 to FIG. 5, and for brevity, details are not repeatedly described herein.

Therefore, in the apparatus for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

In addition, the terms "system" and "network" may be used interchangeably in this specification. The term "and/or" in this specification describes only an association relationship for describing associated objects and represents that three relationships may exist. For example, A and/or B may represent the following three cases: A exists alone, both A and B exist, and B exists alone. In addition, the symbol "/" in this specification generally represents that associated objects before and after the symbol are in an "or" relationship.

It should be understood that in embodiments of the present invention, "B corresponding to A" means that B is associated with A, and B can be determined according to A. It should also be understood that, determining B according to A does not mean that B is determined only according to A, and B may be determined according to A and/or other information.

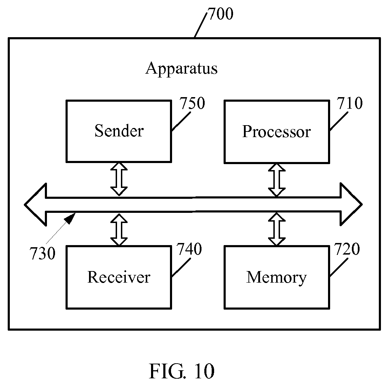

As shown in FIG. 10, an embodiment of the present invention further provides an apparatus 700 for determining an Ethernet clock source, where the apparatus 700 includes a processor 710, a memory 720, a bus system 730, and a receiver 740. The processor 710, the memory 720, and the receiver 740 are connected by using the bus system 730, and the memory 720 is configured to store instructions, and the processor 710 is configured to execute the instructions stored in the memory 720, so as to control the receiver 740 to receive signals. The receiver 740 is configured to receive a first clock information packet sent by a first clock device, where the first clock information packet is used to indicate clock source information of the first clock device; the processor 710 is configured to: based on clock source device identifiers and at least one type of information of the following information: clock source device quality grades, clock source information transfer hop counts, clock source information receiving port numbers, and clock source information sending device identifiers, where the clock source device identifiers and the information are included in the clock source information of the first clock device and a current second clock device, determine a target clock source from a clock source of the second clock device and a clock source of the first clock device; and the processor 710 is further configured to determine the target clock source as a clock source of the second clock device.

Therefore, in the apparatus for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

It should be understood that, in this embodiment of the present invention, the processor 710 may be a central processing unit (Central Processing Unit, "CPU" for short), or the processor 710 may be another universal processor, a digital signal processor (DSP), an application-specific integrated circuit (ASIC), a field programmable gate array (FPGA) or another programmable logical device, a stand-alone gate or a transistor logic device, a stand-alone hardware device, or the like. The universal processor may be a microprocessor or any conventional processor.

The memory 720 may include a read-only memory and a random access memory, and provide instructions and data for the processor 710. Apart of the memory 720 may further include a non-volatile random access memory. For example, the memory 720 may also store information about device types.

The bus system 730 includes not only a data bus, but also may include a power supply bus, a control bus, a status signal bus, and so on. For clearer description, however, all kinds of buses are marked as a bus system 730 in the figure.

In an implementation procedure, steps of the foregoing method may be implemented by integrated logic circuits of hardware in the processor 710 or by software instructions. The steps of the method disclosed in the embodiments of the present invention may be executed by a hardware processor directly, or by a combination of hardware and software modules in the processor. The software modules may reside in a random access memory, a flash memory, a read-only memory, a programmable read-only memory, an electrically erasable programmable memory, a register, or any other storage medium that is mature in the art. The storage medium is located in the memory 720, and the processor 710 reads information in the memory 720, and works together with its hardware to implement the steps of the method. To avoid repetition, no more details are described herein.

Optionally, as an embodiment, the apparatus 700 further includes a transmitter 750, where the transmitter 750 is configured to: when the clock source of the second clock device is different from the target clock source, send a second clock information packet to a third clock device separately connected to each port of the second clock device, where the second clock information packet includes a clock source device identifier, a clock source device quality grade, and a clock source information transfer hop count of the second clock device.

Optionally, as an embodiment, that the processor 710 determines the target clock source includes: when the clock source device identifiers of the second clock device and the first clock device are different, determining that a clock source with a lowest clock source device quality grade is the target clock source.

Optionally, as an embodiment, that the processor 710 determines the target clock source includes: when the clock source device identifiers of the second clock device and the first clock device are different, and the clock source device quality grades of the second clock device and the first clock device are the same, determining that a clock source with a smallest clock source device identifier is the target clock source.

Optionally, as an embodiment, that the processor 710 determines the target clock source includes: when the clock source device identifiers of the second clock device and the first clock device are the same, determining that a clock source with a smallest clock source information transfer hop count is the target clock source.

Optionally, as an embodiment, that the processor 710 determines the target clock source includes: when the clock source device identifiers of the second clock device and the first clock device are the same, and the clock source information transfer hop counts are also the same, determining that a clock source of a clock device with a smallest clock source information sending device identifier is the target clock source.

Optionally, as an embodiment, that the processor 710 determines the target clock source includes: when the clock source device identifiers of the second clock device and the first clock device are the same, the clock source information transfer hop counts are the same, and the clock source information sending device identifiers are also the same, determining that a clock source of a clock device with a smallest clock source information receiving port number is the target clock source.

Optionally, as an embodiment, the clock source information includes a clock source device identifier, a clock source device quality grade, and a clock source information transfer hop count.

Optionally, as an embodiment, the clock source device identifier is a media access control MAC address of a network element on which a clock source is located, an IP address of the network element, or a device identifier of the network element.

It should be understood that, the apparatus 500 for determining an Ethernet clock source according to this embodiment of the present invention may correspond to an apparatus for determining an Ethernet clock source according to the embodiment of the present invention, and the foregoing and other operations and/or functions of each module of the apparatus 500 are to implement corresponding processes of the methods shown in FIG. 1 to FIG. 5, and for brevity, details are not repeatedly described herein.

Therefore, in the apparatus for determining an Ethernet clock source according to this embodiment of the present invention, based on clock source device identifiers and at least one type of information of the following information: clock source device quality grades, clock source information transfer hop counts, clock source information receiving port numbers, and clock source information sending device identifiers, a preferable clock source can be simply, effectively, and reliably determined, a clock can be prevented from forming a loop, and clock deployment can be simplified.

A person of ordinary skill in the art may be aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are executed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments of the present invention.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several indications for indicating a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for determining an Ethernet clock source, comprising:
receiving a first clock information packet sent by a first clock device, wherein the first clock information packet is used to indicate clock source information of the first clock device;
based on clock source device identifiers and at least one type of information of the following information: clock source device quality grades, clock source information transfer hop counts, clock source information receiving port numbers, and clock source information sending device identifiers, wherein the clock source device identifiers and the information are comprised in the clock source information of the first clock device and a current second clock device, determining a target clock source from a clock source of the second clock device and a clock source of the first clock device; and
determining the target clock source as a clock source of the second clock device.

2. The method according to claim 1, wherein the method further comprises:
when the clock source of the second clock device is different from the target clock source, sending a second clock information packet to a third clock device separately connected to each port of the second clock device, wherein the second clock information packet comprises a clock source device identifier, a clock source device quality grade, and a clock source information transfer hop count of the second clock device.

3. The method according to claim 1, wherein the determining a target clock source comprises:
when the clock source device identifiers of the second clock device and the first clock device are different, determining that a clock source with a lowest clock source device quality grade is the target clock source.

4. The method according to claim 1, wherein the determining a target clock source comprises:
when the clock source device identifiers of the second clock device and the first clock device are different, and the clock source device quality grades of the second clock device and the first clock device are the same, determining that a clock source with a smallest clock source device identifier is the target clock source.

5. The method according to claim 1, wherein the determining a target clock source comprises:
when the clock source device identifiers of the second clock device and the first clock device are the same, determining that a clock source with a smallest clock source information transfer hop count is the target clock source.

6. The method according to claim 1, wherein the determining a target clock source comprises:
when the clock source device identifiers of the second clock device and the first clock device are the same, and the clock source information transfer hop counts are also the same, determining that a clock source of a clock device with a smallest clock source information sending device identifier is the target clock source.

7. The method according to claim 1, wherein the determining a target clock source comprises:
when the clock source device identifiers of the second clock device and the first clock device are the same, the clock source information transfer hop counts are the same, and the clock source information sending device identifiers are also the same, determining that a clock source of a clock device with a smallest clock source information receiving port number is the target clock source.

8. The method according to any one of claims 1 to 7, wherein the clock source information comprises a clock source device identifier, a clock source device quality grade, and a clock source information transfer hop count.

9. The method according to any one of claims 1 to 7, wherein the clock source device identifier is a media access control MAC address of a network element on which a clock source is located, an IP address of the network element, or a device identifier of the network element.

10. An apparatus for determining an Ethernet clock source, comprising:
a receiving module, configured to receive a first clock information packet sent by a first clock device, wherein the first clock information packet is used to indicate clock source information of the first clock device;
a first determining module, configured to: based on clock source device identifiers and at least one type of information of the following information: clock source device quality grades, clock source information transfer hop counts, clock source information receiving port numbers, and clock source information sending device identifiers, wherein the clock source device identifiers and the information are comprised in the clock source information of the first clock device received by the receiving module and a second clock device comprised in the apparatus, determine a target clock source from a clock source of the second clock device and a clock source of the first clock device; and
a second determining module, configured to determine the target clock source determined by the first determining module as a clock source of the second clock device.

11. The apparatus according to claim 10, wherein the apparatus further comprises:
a sending module, configured to: when the clock source of the second clock device is different from the target clock source determined by the first determining module, send a second clock information packet to a third clock device separately connected to each port of the second clock device, wherein the second clock information packet comprises a clock source device identifier, a clock source device quality grade, and a clock source information transfer hop count of the second clock device.

12. The apparatus according to claim 10, wherein the first determining module comprises:
a first determining unit, configured to: when the clock source device identifiers of the second clock device and the first clock device are different, determine that a clock source with a lowest clock source device quality grade is the target clock source.

13. The apparatus according to claim 10, wherein the first determining module comprises:
a second determining unit, configured to: when the clock source device identifiers of the second clock device and the first clock device are different, and the clock source device quality grades of the second clock device and the first clock device are the same, determine that a clock source with a smallest clock source device identifier is the target clock source.

14. The apparatus according to claim 10, wherein the first determining module comprises:
a third determining unit, configured to: when the clock source device identifiers of the second clock device and the first clock device are the same, determine that a clock source with a smallest clock source information transfer hop count is the target clock source.

15. The apparatus according to claim 10, wherein the first determining module comprises:
a fourth determining unit, configured to: when the clock source device identifiers of the second clock device and the first clock device are the same, and the clock source information transfer hop counts are also the same, determine that a clock source of a clock device with a smallest clock source information sending device identifier is the target clock source.

16. The apparatus according to claim 10, wherein the first determining module comprises:
a fifth determining unit, configured to: when the clock source device identifiers of the second clock device and the first clock device are the same, the clock source information transfer hop counts are the same, and the clock source information sending device identifiers are also the same, determine that a clock source of a clock device with a smallest clock source information receiving port number is the target clock source.

17. The apparatus according to any one of claims 10 to 16, wherein the clock source information comprises a clock source device identifier, a clock source device quality grade, and a clock source information transfer hop count.

18. The apparatus according to any one of claims 10 to 16, wherein the clock source device identifier is a media access control MAC address of a network element on which a clock source is located, an IP address of the network element, or a device identifier of the network element.
